# EUROPEAN PATENT APPLICATION

(11) **EP 2 716 506 A1**
(43) Date of publication of application: **09.04.2014**
(21) Application number: 12792494.2
(22) Date of filing: 29.05.2012
(51) Int. Cl.: B60R 22/46

(54) **SEATBELT RETRACTOR**

(30) Priority: 31.05.2011 JP 2011121721
(71) Applicant: Ashimori Industry Co., Ltd., Osaka-shi, Osaka 550-0014 (JP)
(72) Inventor: MIYOSHI Hiroyuki, Settsu-shi Osaka 566-0001 (JP); MATSUNAGA Tomonari, Settsu-shi Osaka 566-0001 (JP); YAMANE Eri, Settsu-shi Osaka 566-0001 (JP); NAKAYAMA Tomoe, Settsu-shi Osaka 566-0001 (JP); YAMAKAWA Hiroki, Settsu-shi Osaka 566-0001 (JP)
(74) Representative: Kilian Kilian & Partner
(86) International application number: PCT/JP2012/063717
(87) International publication number: WO 2012/165410

(57) **Abstract**

It is aimed to provide a seatbelt retractor whose manufacturing cost is reduced. A retractor includes a windup drum that winds webbing and a pretensioner unit that causes the windup drum to rotate in a windup direction of the webbing. The pretensioner unit includes a pinion gear configured to rotate in association with the windup drum, a piston that includes a rack for meshing with the pinion gear (165) and causes the windup drum to rotate in the windup direction through the pinion gear, a tubular cylinder that has a circular cross-section and movably holds the piston, and a drive mechanism that drives the piston. The piston further includes, on a rear surface side of the rack, a contact surface configured to come into contact with an inner wall of the cylinder, and the cylinder has such a tube length as not to expose the contact portion in a movable range of the piston.

## Description

### Technical Field

The present invention relates to a seatbelt retractor including a mechanism for removing the slack of webbing in emergency situations.

### Background Art

There have been conventionally proposed various techniques related to seatbelt retractors for removing the slack of webbing in emergency situations such as a vehicle crash.

For example, Patent Document 1 proposes a seatbelt retractor including a windup drum that winds the webbing thereon, and a pretensioner mechanism including a gas generating member, a tubular cylinder having a rectangular cross-section, a piston that moves in the cylinder upon receipt of a gas pressure generated by the gas generating member, and a pinion gear body that rotates through meshing with a rack formed in the piston and is capable of rotating in association with the windup drum.

### Prior Art Document

### Patent Document

Patent Document 1: Japanese Patent Application Laid-Open No. 2009-241867

### Summary of the Invention

### Problem to be Solved by the Invention

Unfortunately, the cylinder having a rectangular cross-section is employed in the seatbelt retractor of Patent Document 1 above, which increases a manufacturing cost of the seatbelt retractor.

The present invention therefore has an object to provide a seatbelt retractor whose manufacturing cost is reduced.

### Means to Solve the Problem

In order to solve the above-mentioned problem, a first aspect of the present invention relates to a seatbelt retractor including a windup drum that winds webbing, and a pretensioner unit that causes the windup drum to rotate in a windup direction of the webbing, wherein the pretensioner unit includes: a pinion gear configured to rotate in association with the windup drum; a piston that includes a rack for meshing with the pinion gear and causes the windup drum to rotate in the windup direction through the pinion gear; a tubular cylinder that has a circular cross-section and movably holds the piston; and a drive mechanism that drives the piston, the piston includes, on a rear surface side of the rack, a contact portion configured to come into contact with an inner wall of the cylinder, and the cylinder has such a tube length as not to expose the contact portion of the piston in a movable range of the piston.

In a second aspect of the present invention, in the seatbelt retractor of the first aspect, the pretensioner unit further includes a base plate and a cover plate that sandwich the tubular cylinder from a side surface thereof, a cutout that allows the rack to appear for meshing with the pinion gear is provided on the side surface of the tubular cylinder, the cover plate includes a cylinder covering portion that covers the side surface of the cylinder along a shape of the side surface, and the cylinder covering portion includes a drawn portion recessed so as to be fitted into the cutout of the cylinder.

In a third aspect of the present invention, in the seatbelt retractor of the second aspect: the pinion gear is rotatably sandwiched between the base plate and the cover plate, with both end parts in an axial direction of said pinion gear being respectively fitted into an opening provided in said base plate and a shaft support portion provided in said cover plate; the cover plate includes a flat covering portion that is continuous with the cylinder covering portion and includes the shaft support portion; and in the cover plate, a part extending from the shaft support portion to the drawn portion is formed of a flat plate flush with the plate covering portion.

In a fourth aspect of the present invention, in the seatbelt retractor of the third aspect, the flat covering portion is provided with a first bead that extends along a direction of a load to be received, upon meshing of the pinion gear and the rack, from an end of the pinion gear inserted into the shaft support portion of the cover plate.

In a fifth aspect of the present invention, in the seatbelt retractor of any one of the second to fourth aspects, the cylinder covering portion is provided with a second bead that extends along a circumferential direction of the side surface of the tubular cylinder.

In a sixth aspect of the present invention, in the seatbelt retractor of the fifth aspect, the second bead is provided at such a position as not to be adjacent to a contact portion of the piston located on an extreme end side in a state in which the pinion gear and the rack first mesh with each other.

### Effects of the Invention

According to the first aspect, the cylinder having a circular cross-section is used, which reduces a manufacturing cost of the cylinder, resulting in a reduction of a manufacturing cost of a seatbelt retractor. Further, the cylinder has such a tube length as not to expose the contact portion of the piston in a movable range of the piston, which enables to stably hold the shape of the sliding surface of the piston. Accordingly, a reduction in traveling force of the piston can be prevented, which enables to improve the performance of the pretensioner unit.

According to the second aspect, an axial movement of the cylinder can be restricted, which enables to suppress the cylinder from becoming deviated when the pretensioner unit operates.

According to the third aspect, the strength of the cover plate can be increased, which enables to suppress the deformation of the cover plate due to a force applied from the pinion gear.

According to the fourth aspect, the strength of the cover plate can be increased against the load to be applied from the pinion gear to the cover plate.

According to the fifth aspect, the strength of the cover plate can be increased against the load to be applied from the cylinder to the cover plate.

According to the sixth aspect, the cylinder can be prevented from deforming due to a load applied from the piston when the piston moves.

### Brief Description of Drawings

Fig. 1 is a perspective view showing a seatbelt retractor according to an embodiment.
Fig. 2 is an exploded perspective view showing the seatbelt retractor disassembled in units of components each implementing a predetermined function.
Fig. 3 is an exploded perspective view showing a windup drum and a pretensioner unit disassembled in further detail.
Fig. 4 is a vertical cross-sectional view of the pretensioner unit in a standby state.
Fig. 5 is a perspective view of a pipe cylinder that forms the pretensioner unit.
Fig. 6 is a perspective view of a cover plate.
Fig. 7 is a view showing lateral cross-sections at respective positions in the pretensioner unit.
Fig. 8 is a vertical cross-sectional view of the pretensioner unit.
Fig. 9 is a perspective view showing the pretensioner unit viewed from a surface side on which the pretensioner unit is mounted to a housing unit.
Fig. 10 is a vertical cross-sectional view of the pretensioner unit.
Fig. 11 is a vertical cross-sectional view of the pretensioner unit in a state in which a rack and a pinion gear first mesh with each other.
Fig. 12 is an outline view showing the pretensioner unit viewed from the cover plate side.
Fig. 13 is a view showing a comparative example of the pretensioner unit according to the embodiment.

### Description of Embodiment

Hereinafter, an embodiment is described with reference to the drawings. Elements denoted by like references in different drawings represent like or corresponding elements.

### <Embodiment>

### [1. Overall configuration]

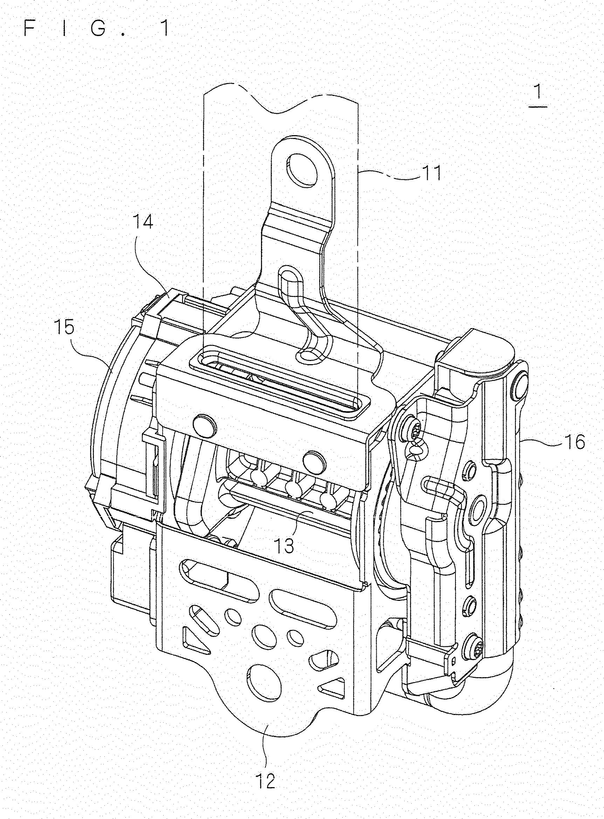

Fig. 1 is a perspective view showing a seatbelt retractor 1 according to this embodiment.

As shown in Fig. 1, the seatbelt retractor (also merely referred to as "retractor") 1 according to this embodiment is applied to a seatbelt device provided to a seat of, for example, a vehicle. In a normal state, the retractor 1 holds webbing 11 being a seat belt to be drawn therefrom and wound therein. The retractor 1 is configured to, in emergency situations such as a vehicle crash and sudden deceleration, wind the webbing 11 such that the slack thereof is removed for effectively restraining an occupant and then gradually unwind the webbing 11 such that an impact to be applied to the occupant is mitigated.

The retractor 1 includes a housing unit (housing) 12, a windup drum 13, an emergency lock unit 14, a windup spring unit 15, and a pretensioner unit 16. Here, the windup drum 13 is accommodated in the housing 12, and the emergency lock unit 14, the windup spring unit 15, and the pretensioner unit 16 are provided outside of the housing 12. Here, viewing the positional relationship of components of the retractor 1 with the windup drum 13 being at the center, the configuration is made such that the emergency lock unit 14 and the windup spring unit 15 are provided to one end side (left end side in Fig. 1) of the windup drum 13 and the pretensioner unit 16 is provided to the other end side (right end side in Fig. 1) of the windup drum 13.

### [2. Functions of components and schematic configurations of components]

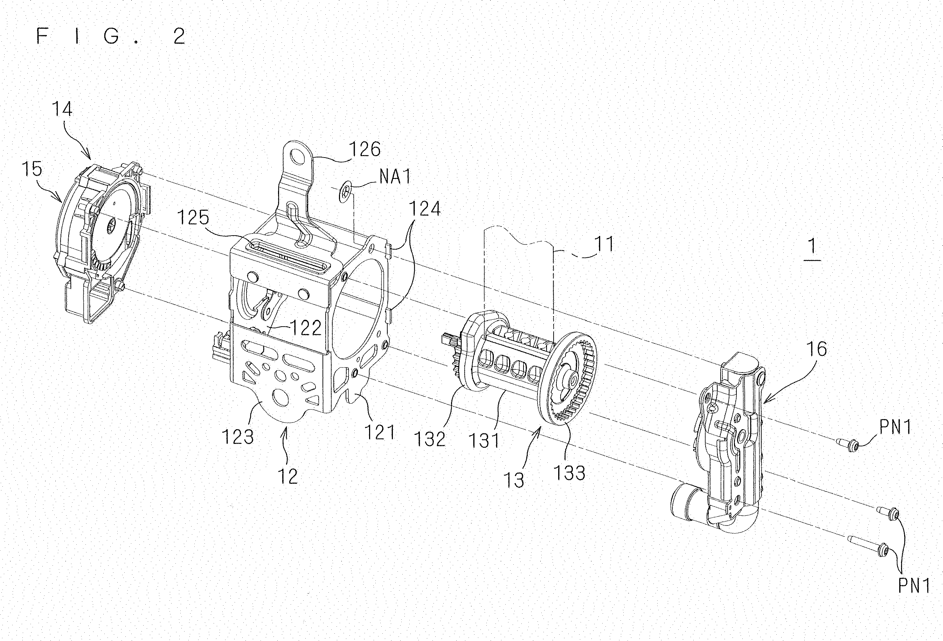

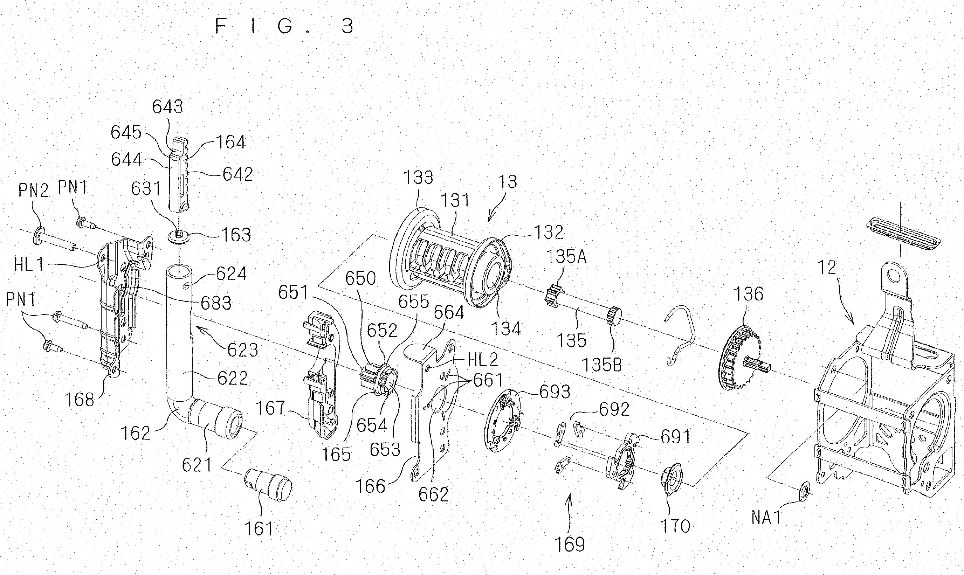

Next, the components of the retractor 1 are described. Fig. 2 is an exploded perspective view showing the seatbelt retractor 1 disassembled in units of components each implementing a predetermined function. Fig. 3 is an exploded perspective view showing the windup drum 13 and pretensioner unit 16 disassembled in further detail.

As shown in Fig. 2, the housing 12 includes a pair of side plate portions 121 and 122 provided to face each other, and connecting plate portions 123 and 124 that connect edges of the side plate portions 121 and 122. In the upper part of the connecting plate portion 123 is provided a member 126 having an opening 125 for drawing the webbing 11 to the outside.

The housing 12 is configured such that the emergency lock unit 14 can be mounted to the exterior of the side plate portion 122 on one side and the pretensioner unit 16 can be mounted to the exterior of the side plate portion 121 on the other side with the windup drum 13 being arranged between the pair of side plate portions 121 and 122.

The windup drum 13 is a member rotatably arranged in the housing 12 while the webbing 11 is wound thereon. Specifically, the windup drum 13 is formed of an aluminum material or the like and includes a drum main body 131 that has an approximately cylindrical shape and flange portions 132 and 133 that are formed at both end parts in an axial direction of the drum main body 131 so as to project radially. The webbing 11 is wound on the drum main body 131 between the flange portions 132 and 133.

Further, as shown in Fig. 3, an axial bore 134 that does not pass through the windup drum 13 is formed along a central axis in the windup drum 13, and a torsion bar 135 is inserted into the axial bore 134. One-end part 135A of the torsion bar 135 is coupled so as not to rotate relative to the windup drum 13 inside the axial bore 134. Meanwhile, the other-end part 135B of the torsion bar 135 is coupled to a ratchet gear 136 to be connected to the emergency lock unit 14 so as not to rotate relative thereto.

The emergency lock unit 14 (see Figs. 1 and 2) is fixedly provided to the side plate portion 122 of the housing 12, and operates to stop drawing of the webbing 11 via the ratchet gear 136 in response to sudden drawing of the webbing 11 and a sudden acceleration change of a vehicle.

The windup spring unit 15 is provided outside of the emergency lock unit 14 and serves to always rotatively bias the windup drum 13 in the windup direction of the webbing 11 by a biasing force of a spiral spring provided inside of the windup spring unit 15.

The pretensioner unit 16 is fixedly provided to the side plate portion 121 of the housing 12 with self-tapping screws PN1 by directly tightening a cover plate 168 (Fig. 3) and a base plate 166 (Fig. 3) together or tightening the cover plate 168 and the base plate 166 together with a base block 167 (Fig. 3) provided therebetween. The pretensioner unit 16 is a mechanism that causes a gas generating member (gas generator) 161 to work in accordance with a predetermined sensor output in emergency situations such as a vehicle crash such that the windup drum 13 is rotated in the windup direction of the webbing via the flange portion 133 of the windup drum 13 with the use of a pressure of a gas (fluid) from the gas generating member 161.

The pretensioner unit 16 is operated to wind the webbing 11 in emergency situations such as a vehicle crash, so that the slack of the webbing 11 is removed, which enables to effectively restrain the occupant toward the seat.

The pretensioner unit 16 operates irreversibly, that is, only once to wind the webbing 11 in emergency situations such as an actual vehicle crash. In other words, after the actual vehicle crash, a mechanism for tightening the webbing 11 again is not required, so that the irreversible pretensioner unit 16 tightens the webbing 11 relatively firmly.

### [3. Detailed configuration of pretensioner unit 16]

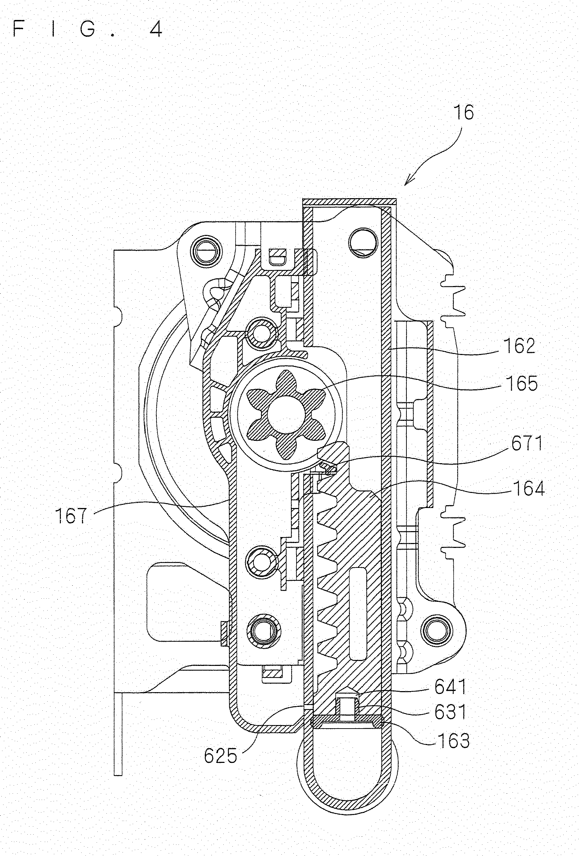

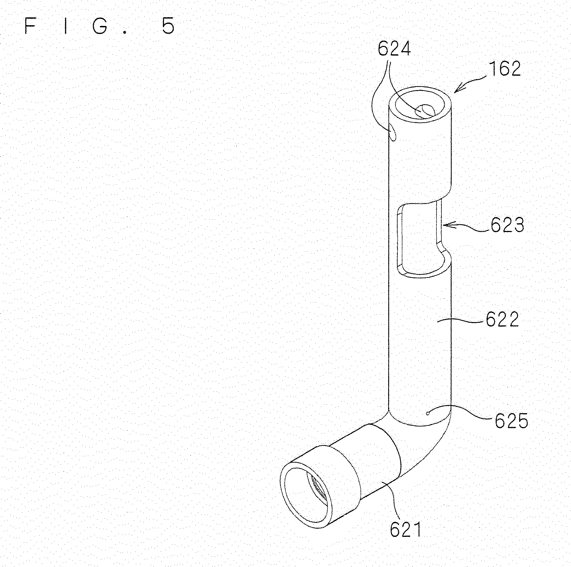

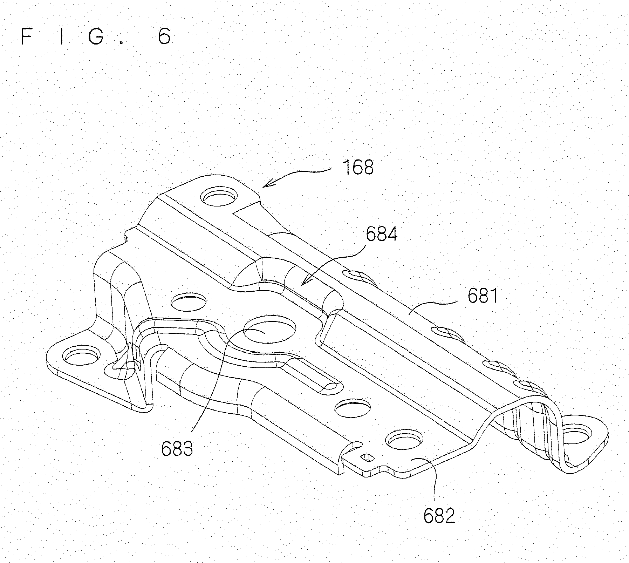

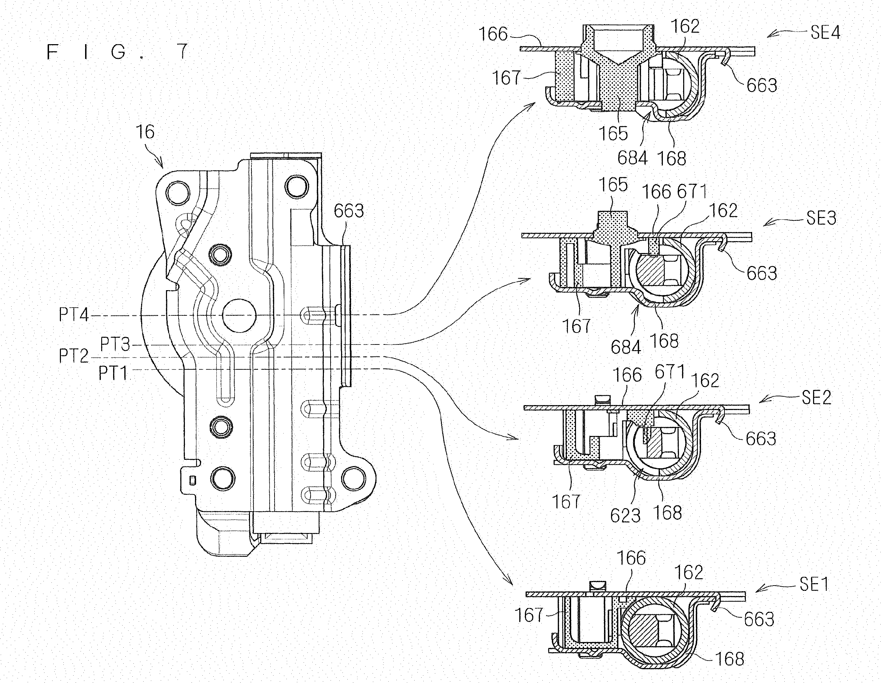

Next, the configuration of the pretensioner unit 16 is described in detail. Fig. 4 is a vertical cross-sectional view of the pretensioner unit 16 in a standby state. Fig. 5 is a perspective view of a pipe cylinder 162 that forms the pretensioner unit 16. Fig. 6 is a perspective view of the cover plate 168. Fig. 7 is a view showing lateral cross-sections at positions PT1 to PT4 in the pretensioner unit 16.

As shown in Fig. 3, the pretensioner unit 16 includes the gas generating member 161, the pipe cylinder 162, a seal plate 163 and a piston 164 that move through the pipe cylinder 162 upon receipt of the gas pressure of the gas generating member 161, a pinion gear 165 that meshes (engages) with a rack 642 formed in the piston 164 and rotates, the base plate 166 to which the pipe cylinder 162 is mounted, the base block 167 that is formed of a synthetic resin such as polyacetal and is disposed to the base plate 166 so as to cover the side surface of the pinion gear 165, the cover plate 168 that covers the pipe cylinder 162, base block 167, and the like disposed in the base plate 166, and a clutch mechanism 169 disposed on the outer surface of the base plate 166.

The pinion gear 165 is formed of, for example, a steel material and has an approximately circular shape, and a pinion gear portion 650 that meshes with the rack 642 formed in the piston 164 is formed in the outer peripheral part thereof. On the cover plate 168 side in the axial direction of the pinion gear portion 650 is provided a support portion 651 having a tubular shape that is extended outwardly. The support portion 651 is inserted into a support hole 683 of the cover plate 168 as described below.

Meanwhile, a flange portion 652 that projects radially is formed at the end part on the base plate 166 side in the axial direction of the pinion gear portion 650. Further, a boss portion 654 including a bearing portion 653 into which the bearing 170 is fitted is formed outwardly from the flange portion 652. Three splines are formed every central angle of about 120 degrees on the outer peripheral surface at the distal end part of the boss portion 654.

The clutch mechanism 169 includes a pawl base 691 formed of, for example, a steel material, three clutch pawls 692 formed of, for example, a steel material, and an approximately toroidal pawl guide 693 that is formed of a synthetic resin such as polyacetal and sandwiches the clutch pawls 692 together with the pawl base 691.

Three spline grooves into which the splines formed in the boss portion 654 of the pinion gear 165 are press-fitted are formed every central angle of about 120 degrees on the inner peripheral surface of the pawl base 691. The inner peripheral diameter of the pawl guide 693 is formed to be larger than spline groove of the pawl base 691. Three positioning projections (not shown) are provided in a protruding manner at equal angles in the side surface part on the base plate 166 side of the pawl guide 693.

In configuring the retractor 1, the positioning projections that are provided in a protruding manner in the side surface part on the base plate 166 side of the pawl guide 693 of the clutch mechanism 169 are fitted into positioning holes 661 of the base plate 166, so that the clutch mechanism 169 is arranged on the surface of the side plate portion 121 side of the housing 12 in the base plate 166. Then, the boss portion 654 of the pinion gear 165 is fitted into a through hole (opening) 662 formed at the approximately center part of the base plate 166, and then, the splines formed in the boss portion 654 are respectively press-fitted into and fixed to the spline grooves of the pawl base 691 that forms the clutch mechanism 169. As a result, the clutch mechanism 169 and the pinion gear 165 are disposed and fixed to the base plate 166, and the pinion gear portion 650 of the pinion gear 165 is always positioned and fixed at the position shown in Fig. 4.

The inner diameter of the through hole 662 formed at the approximately center part of the base plate 166 is formed into such a diameter as to support the outer diameter of a proximal end part 655 of the boss portion 654 of the pinion gear 165 so that one-end side of the pinion gear 165 can be rotatably supported.

The pipe cylinder (cylinder) 162 (see Figs. 3 and 5) is formed by bending a tubular steel pipe material or the like into an approximately L-like shape.

Specifically, a holding portion 621 having an approximately tubular shape is formed on the one-end side (lower bent part in Fig. 5) of the pipe cylinder 162, which is configured to hold the gas generating member 161. The gas generating member 161 contains explosives and is configured to ignite the explosives in response to an ignition signal from a controller (not shown) to generate a gas by burning of a gas-forming agent. The gas generating member 161 functions as a drive mechanism that drives the piston 164 arranged in the pipe cylinder 162.

On the other-end side (upper bent part in Fig. 5) of the pipe cylinder 162, meanwhile, is provided a piston holding portion 622. The piston holding portion 622 has a tubular shape with an approximately circular cross-section, and a cutout 623 is formed in a part thereof from the middle to the upper end of the tube. Movement of the piston 164 causes the rack 642 of the piston 164 to appear from the cutout 623. In a case where the pipe cylinder 162 is disposed on the base plate 166, the pinion gear portion 650 of the pinion gear 165 is located in the cutout 623 so as to mesh with the rack 642.

The piston holding portion 622 of the pipe cylinder 162 is formed to have an approximately circular cross-sectional shape as described above, which enables to reduce a manufacturing cost of the pipe cylinder 162 by a larger amount compared with a case in which the piston holding portion 622 is formed to have a rectangular cross-section.

On the upper-end part of the piston holding portion 622 are formed a pair of through holes 624 that face each other, through which a stopper pin PN2 can be inserted. The stopper pin PN2 mounts the pretensioner unit 16 to the housing 12 and serves to prevent the piston 164 from slipping and prevent the pipe cylinder 162 from slipping and rotating. The stopper pin PN2 is inserted into a through hole HL1 of the cover plate 168, a through hole HL2 of the base plate 166, and the pair of through holes 624 of the pipe cylinder 162, and tightens together the cover plate 168, the pipe cylinder 162, and the base plate 166 and fixes them to the housing 12 with a push nut NA1.

The seal plate 163 is formed of, for example, a rubber material into an approximately circular plate shape that can be inserted from the upper-end side of the piston holding portion 622. On a center part of the seal plate 163 is provided a projection 631.

The piston 164 is formed of, for example, a steel material and has a long shape as a whole. The rack 642 that meshes with the pinion gear portion 650 of the pinion gear 165 is formed on the side surface of the piston 164. On a rear surface at the distal-end part of the rack 642 is a step 643 that can abut against the stopper pin PN2. In the lower-end part of the piston 164 is provided a fitting groove 641 (see Fig. 4) into which the projection 631 of the seal plate 163 can be fitted.

The surface on the side opposite to the side surface on which the rack 642 is formed is configured as a contact surface 644 that can come into contact with the inner wall of the pipe cylinder 162. The contact surface 644 has a shape corresponding to the inner wall surface of the pipe cylinder 162 such that the piston 164 can slide smoothly through the pipe cylinder 162. In other words, the cross-section on the contact surface side of the piston 164 is formed into an arc shape.

The part on the rear surface side of the rack 642, which can come into contact with the inner wall of the pipe cylinder 162, is also referred to as a "contact portion". This embodiment has illustrated the contact surface 644 as the contact portion, which may have other shape unless the contact portion hinders the piston 164 from moving smoothly. For example, a hemispherical projection may be provided on the rear surface side of the rack 642 to function as the contact portion.

The piston 164 having the above-mentioned shape is press-fitted inwardly from the upper end of the piston holding portion 622 while the projection 631 of the seal plate 163 is fitted into the fitting groove 641 of the piston 164, where the seal plate 163 is on the inward side of the piston holding portion 622.

As shown in Fig. 4. the press-fitted piston 164 is arranged such that the distal end of the rack 642 does not mesh with the pinion gear portion 650 on the inward side of the piston holding portion 622. In the non-meshing state above, the piston 164 is positioned and restricted from rotating by a positioning rib 671 that is provided in the base block 167 and, when the pretensioner unit 16 operates, is sheared by the piston 164 (see Fig. 4 and cross-sections SE2 and SE3 of Fig. 7).

As shown in Fig. 6, the cover plate 168 includes a cylinder covering portion 681 that covers the side surface of the pipe cylinder 162 along the shape of this side surface, and a plane-like flat covering portion 682 that covers the pinion gear 165 and the base block 167.

The cylinder covering portion 681 has such a round shape as to extend along the side surface of the tubular pipe cylinder 162 for abutting against and cover this side surface. A drawn portion 684 obtained by recessing a part of the cylinder covering portion 681 is formed in the cylinder covering portion 681.

The flat covering portion 682 is formed to be continuous with the cylinder covering portion 681 and has the support hole 683 into which the support portion 651 of the pinion gear 165 is inserted. The part extending from the support hole 683 to the drawn portion 684 of the cylinder covering portion 681 is formed of a flat plate flush with the flat covering portion 682.

The cover plate 168 having the above-mentioned structure is arranged to cover the pipe cylinder 162 with the cylinder covering portion 681 while causing the support portion 651 of the pinion gear 165 to be inserted into the support hole 683, and is fixedly provided to the housing 12 together with the base plate 166 with the self-tapping screws PN1.

In the state in which the cover plate 168 is fixedly provided to the housing 12, the proximal end part 655 and the support portion 651 of the boss portion 654 that are formed in both end parts of the pinion gear 165 are inserted into the through hole 662 of the base plate 166 and the support hole 683 of the cover plate 168, respectively. As a result, the pinion gear 165 is rotatably supported by the base plate 166 and the cover plate 168. Illustrated here is the case in which the support hole 683 of the cover plate 168 is a through hole, which may be a recessed part that does not pass through the cover plate 168. In this case, the support portion 651 of the pinion gear 165 is inserted into the recessed part. The support hole 683 and the recessed part are also referred to as "shaft support portion". The shaft support portion formed as a recessed part in this manner can increase the strength of the cover plate 168.

In the state in which the cover plate 168 is fixedly provided to the housing 12, the pipe cylinder 162 is sandwiched between the base plate 166 and the cover plate 168 and is also sandwiched between the base block 167 and the cover plate 168.

In the state in which the cover plate 168 is fixedly provided to the housing 12, the drawn portion 684 of the cylinder covering portion 681 is fitted into the cutout 623 of the pipe cylinder 162.

Fig. 7 shows the state in which the drawn portion 684 is fitted into the cutout 623. Specifically, as shown in Fig. 7, a cross-section SE1 at a position PT1 in the pretensioner unit 16 shows the state in which the pipe cylinder 162 is supported by the base plate 166, cover plate 168, and base block 167. The cross-section SE2 at a position PT2 above the position PT1 shows the state in which the cutout 623 appears in the pipe cylinder 162. The cross-section SE3 at a position PT3 above the position PT2 shows the state in which the drawn portion 684 formed in the cover plate 168 appears and the drawn portion 684 is on the inside of the pipe cylinder 162 beyond the outer diameter of the pipe cylinder 162. A cross-section SE4 at a position PT4 above the position PT3 shows the state in which the drawn portion 684 of the cover plate 168 is completely on the inside of the pipe cylinder 162 beyond the outer diameter of the pipe cylinder 162.

In this manner, the drawn portion 684 is formed by recessing a part of the cylinder covering portion 681 so as to be fitted into the cutout 623 of the pipe cylinder 162, which enables to restrict the axial movement of the pipe cylinder 162. Specifically, when the pipe cylinder 162 attempts to move axially, the cutout 623 of the pipe cylinder 162 comes into contact with the drawn portion 684 of the cylinder covering portion 681. As a result, the axial movement of the pipe cylinder 162 is restricted, which suppresses a deviation of the pipe cylinder 162 during the operation of the pretensioner unit 16. The drawn shape of the drawn portion 684 is caused to correspond to the cutout shape of the cutout 623 to minimize a gap therebetween as much as possible, suppressing a deviation more effectively.

The stopper pin PN2 is provided as a deviation suppressing member for the pipe cylinder 162 during the operation of the pretensioner unit 16. The provision of the drawn portion 684 to be fitted into the cutout 623 enables to reduce the loads to be applied to the stopper pin PN2 and the holes through which the stopper pin PN2 is inserted. This also enables to, for example, reduce the diameter of the stopper pin PN2.

In the pretensioner unit 16, in the state in which the cover plate 168 is caused to coincide with the base plate 166, an end part 663 of the base plate 166 is bent and crimped from the state in which it is bent at, for example, a right angle toward the pipe cylinder 162 as shown in the cross-sections SE1 to SE4 of Fig. 7, so that the force of the cover plate 168 to be fixedly provided to the base plate 166 is increased. Accordingly, the number of components such as pins and screws for use in fixation can be reduced.

In the state in which the cover plate 168 is fixedly provided to the housing 12, the upper-end-side opening of the piston holding portion 622 of the pipe cylinder 162 is covered with a cover portion 664 extended approximately perpendicularly from the upper-end part of the base plate 166.

While the cover plate 168 and the base plate 166 are provided in this embodiment, the pretensioner unit 16 may be formed by integrating the base plate 166 with the side plate portion 121 of the housing 12 and fixing the clutch mechanism 169, the pinion gear 165, and the cover plate 168 to the side plate portion 121 of the housing 12.

### [4. Operation of pretensioner unit 16]

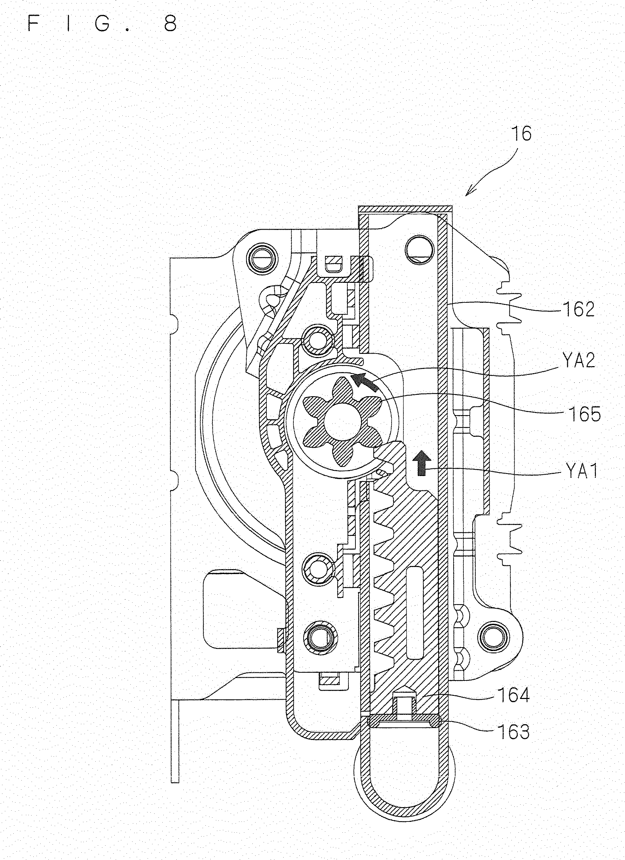

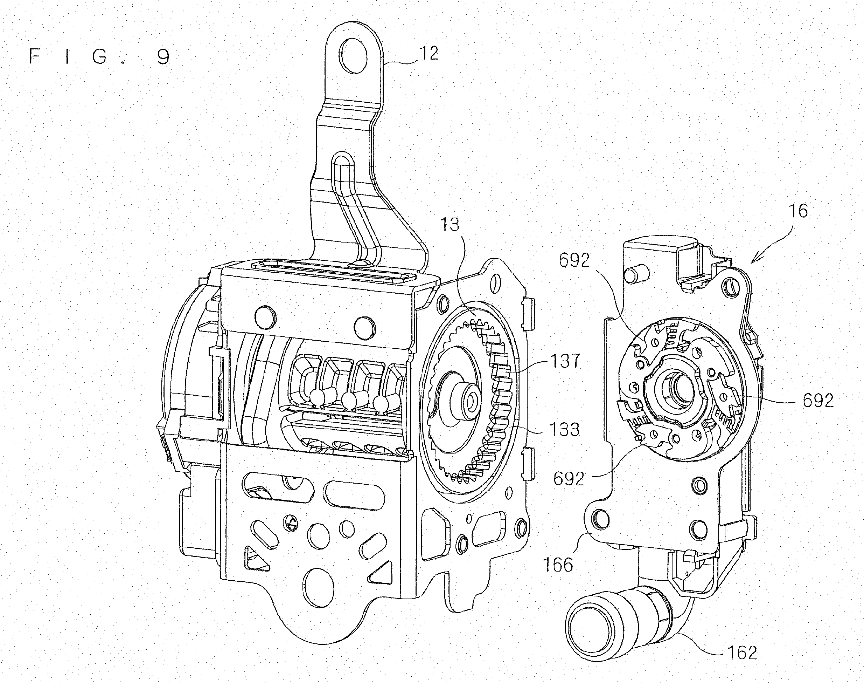

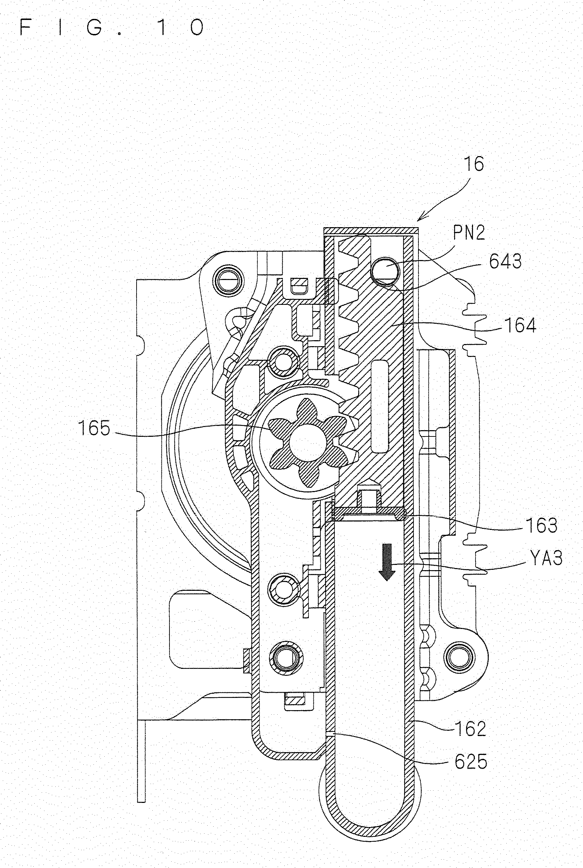

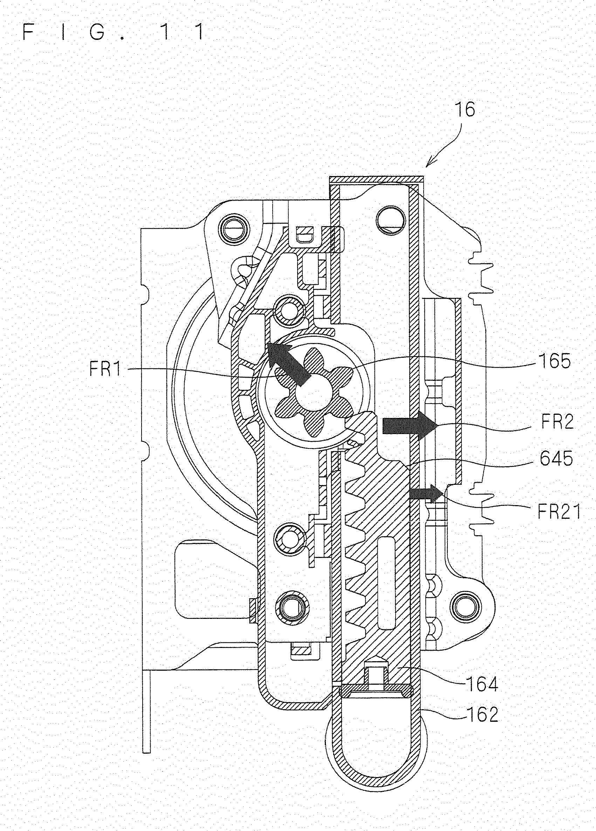

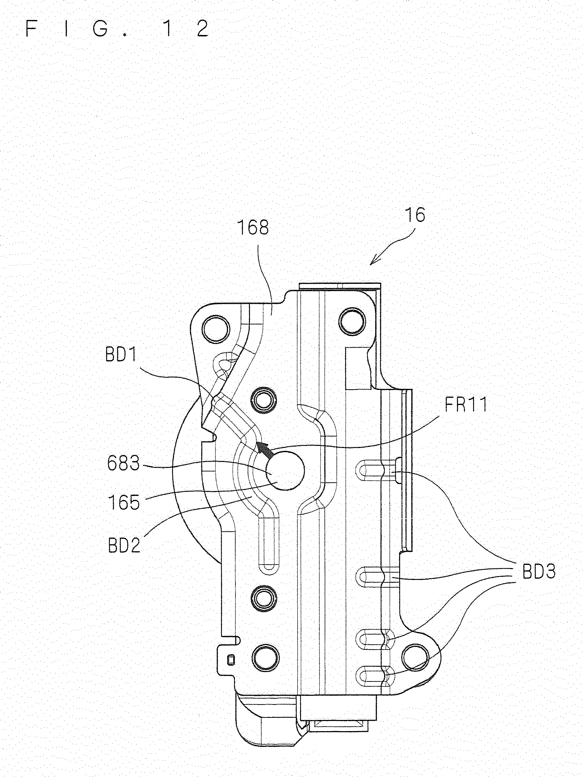

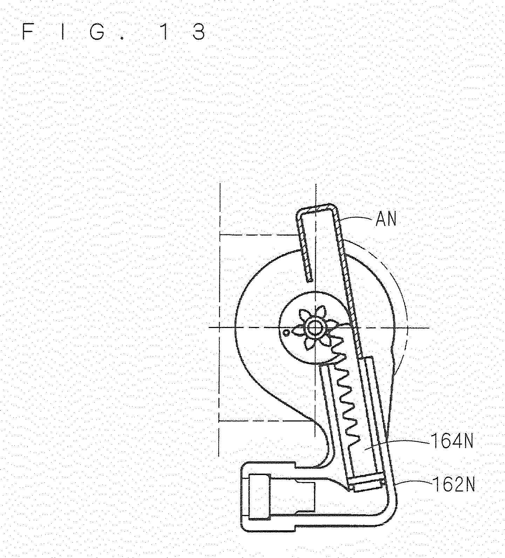

Next, the operation of winding the webbing 11 by the pretensioner unit 16 during a vehicle crash, namely the operation of the pretensioner unit 16 is described. Fig. 8 is a vertical cross-sectional view of the pretensioner unit 16. Fig. 9 is a perspective view showing the pretensioner unit 16 viewed from the surface side on which the pretensioner unit 16 is mounted to the housing unit 12. Fig. 10 is a vertical cross-sectional view of the pretensioner unit 16. Fig. 11 is a vertical cross-sectional view of the pretensioner unit 16 in a state in which the rack 642 and the pinion gear 165 first mesh with each other. Fig. 12 is an outline view showing the pretensioner unit 16 viewed from the cover plate 168 side. Fig. 13 is a view showing a comparative example of the pretensioner unit 16 according to this embodiment.

Upon generation of a gas from the gas generating member 161 in a standby state as shown in Fig. 4, the seal plate 163 is pressed by a pressure of the generated gas. Upon pressing of the seal plate 163, as shown in Fig. 8, the piston 164 moves toward the upper end (in the direction of an arrow YA1 in Fig. 8) of the piston holding portion 622, and the pinion gear 165 meshing with the rack 642 rotates in the direction of an arrow YA2.

The pinion gear 165 turns in the direction of the arrow YA2, so that the pawl base 691 rotates relative to the pawl guide 693. Along with this rotational movement, the clutch pawls 692 (see Fig. 9) accommodated in the clutch mechanism 169 project in the outer diameter direction. In the flange portion 133 of the windup drum 13, the clutch pawls 692 projected are engaged with a clutch gear 137 (see Fig. 9) marked toward the axis.

After the projection of the clutch pawls 692, a drive force is applied to the pawl guide 693. When the pawl guide 693 can no longer withstand the drive force, the positioning projection of the pawl guide 693 fitted into the positioning hole 661 of the base plate 166 is broken. After that, the clutch mechanism 169 operates in an integrated manner and causes the windup drum 13 to rotate in the direction of winding the webbing 11 via the clutch pawls 692 engaged with the clutch gear 137, whereby the webbing 11 is wound.

Then, in a case where the piston 164 moves to the uppermost end of the piston holding portion 622 by a pressure of a gas generated in the gas generating member 161, the step 643 of the piston 164 abuts against the stopper pin PN2 inserted into the through holes 624, whereby the piston 164 is stopped (see Fig. 10).

In a case where the webbing 11 is unwound again after the operation of the pretensioner unit 16, the piston 164 moves downward (in the direction of an arrow YA3 in Fig. 10) by the reverse rotation of the pinion gear 165. On this occasion, the pipe cylinder 162 is degassed through a gas release hole 625 provided to the pipe cylinder 162, which allows the piston 164 to smoothly move downward.

In the operation of the pretensioner unit 16 as described above, when the piston 164 is moved upward by a gas pressure so that the rack 642 meshes with the pinion gear 165, forces FR1 and FR2 as indicated by arrows in Fig. 11 are applied to the pinion gear 165 and the piston 164, respectively.

As shown in Fig. 12, when the force FR1 is applied to the pinion gear 165, a force FR11 is applied from the pinion gear 165 to the support hole 683 of the cover plate 168 that supports the pinion gear 165.

As shown in Fig. 12, a bead (reinforced bead) BD1 that is a linear projection extending along the load direction of the force FR11 (FR1) is formed in the cover plate 168 of the this embodiment such that the cover plate 168 withstands the force FR11. Besides, a bead BD2 being a linear projection is provided around the support hole 683 of the cover plate 168 so as to be continuous with the bead BD1.

The provision of the bead BD1 along the load direction of the force FR11 to be applied to the cover plate 168 from the pinion gear 165 as described above enables to efficiently increase the strength of the cover plate 168 against the force FR11 to be applied to the cover plate 168 upon meshing of the pinion gear 165 and the rack 642. The provision of the bead BD2 around the support hole 683 enables to further increase the strength of the cover plate 168.

In the cover plate 168, the part extending from the support hole 683 that supports the pinion gear 165 to the drawn portion 684 of the cylinder covering portion 681 is formed of the flat plate flush with the flat covering portion 682. With the above-mentioned configuration being employed in the part extending from the support hole 683 to the drawn portion 684, the strength of the cover plate 168 can be fed without increasing the thickness of the cover plate 168 or changing the material of the cover plate 168. This enables to suppress a deviation of the cover plate 168 upon receipt of a force applied from the pinion gear 165.

As described above, the strength of the cover plate 168 around the support hole 683 can be increased by providing the beads BD1 and BD2 and the drawn portion 684 around the support hole 683 of the cover plate 168, which enables to prevent the pinion gear 165 from moving and tilting.

When the force FR2 (see Fig. 11) is applied to the piston 164 due to meshing of the pinion gear 165 and the rack 642, a force FR21 in the direction same as the load direction of the force FR2 is also applied to the pipe cylinder 162.

In this embodiment, therefore, beads BD3 that are linear projections extending along the circumferential direction of the side surface of the cylinder are formed in the cylinder covering portion 681 of the cover plate 168, so that the cover plate 168 can withstand the load applied thereto from the pipe cylinder 162 due to meshing of the pinion gear 165 and the rack 642.

In this manner, the beads BD3 are formed in the cylinder covering portion 681 of the cover plate 168, which enables to increase the strength of the cover plate 168 against the force FR21 to be applied from the pipe cylinder 162 to the cover plate 168.

The beads BD3 provided in the cylinder covering portion 681 of the cover plate 168 are preferably formed at the positions that are not adjacent to the position of the distal end part 645 on the contact surface 644 of the piston 164 when the rack 642 and the pinion gear 165 first mesh with each other. In a position (state) in which the rack 642 and the pinion gear 165 first mesh with each other as shown in Fig. 11, in a case where the beads BD3 are formed at the positions adjacent to the distal end part 645 on the contact surface 644 of the piston 164 with the pipe cylinder 162 being sandwiched therebetween, the pipe cylinder 162 that has received a load from the distal end part 645 may deform. Accordingly, in the position in which the rack 642 and the pinion gear 165 first mesh with each other, the deformation of the pipe cylinder 162 can be prevented by the formation of the beads BD3 at positions at which the beads BD3 are not adjacent to the distal end part 645 on the contact surface 644 of the piston 164. If the contact surface 644 is viewed as the contact portion, the beads BD3 are formed at such positions as not to be adjacent to the contact portion located on the extreme end side of the piston 164 in the position in which the rack 642 and the pinion gear 165 first mesh with each other.

As described above regarding the operation of the pretensioner unit 16, the pipe cylinder 162 also functions as a load receiving portion that receives the load to be applied to the piston 164 due to meshing of the rack 642 and the pinion gear 165.

The occurrence of deviation on a sliding surface with the piston 164 can be prevented by causing the pipe cylinder 162 to serve as the load receiving portion as described above, differently from the case in which the pipe cylinder 162 and the load receiving portion are individually configured.

Specifically, if a pipe cylinder 162N and a load receiving portion AN are individually configured as shown in the comparative example of Fig. 13, the positional relationship between the pipe cylinder 162N and load receiving portion AN may be deviated by a force to be applied to a piston 164N due to meshing of the pinion gear 165 and the rack 642. In a case where the positional relationship between the pipe cylinder 162N and load receiving portion AN is deviated, the surface in sliding contact with the piston 164N becomes uneven, and thus, the piston 164N does not slide smoothly. This results in an increase in sliding resistance of the piston 164N.

Meanwhile, the pipe cylinder 162 of this embodiment is configured to have such a tube length as not to expose the contact portion (contact surface 644) of the piston 164 that can come into contact with the inner wall of the pipe cylinder 162 in a movable range of the piston 164.

In other words, in this embodiment, the pipe cylinder 162 that can cover the entire contact portion of the piston 164 is used in the entire movable range of the piston 164, so that the pipe cylinder 162 is caused to also function as a load receiving portion.

Owing to the use of the pipe cylinder 162 capable of covering the entire contact portion of the piston 164 in the entire movable range of the piston 164 as described above, the shape of the sliding surface can be stably kept. This consequently prevents a reduction in traveling force of the piston 164, which enables to improve the performance of the pretensioner unit 16.

It can also be said that a pipe cylinder and a load receiving portion are integrally formed in the pipe cylinder 162 of this embodiment. The integration of the pipe cylinder and load receiving portion results in reductions of, for example, the number of components, cost, and weight.

As described above, the retractor 1 of this embodiment includes the windup drum 13 that winds the webbing 11, and the pretensioner unit 16 that causes the windup drum 13 to rotate in the direction of winding the webbing 11. The pretensioner unit 16 includes the pinion gear 165 capable of rotating in association with the windup drum 13, the piston 164 that includes the rack 642 to be meshed with the pinion gear 165 and causes the windup drum 13 to rotate through the pinion gear 165, the tubular pipe cylinder 162 that has a circular cross-section and movably holds the piston 164, and the drive mechanism that drives the piston 164. Further, the piston 164 includes, on the rear surface side of the rack 642, the contact portion that can come into contact with the inner wall of the pipe cylinder 162, and the pipe cylinder 162 includes such a tube length as not to expose the contact portion of the piston 164 in the movable range of the piston 164.

The retractor 1 employs the pipe cylinder 162 having a circular cross-section, which enables to reduce a manufacturing cost of the pipe cylinder 162, resulting in a reduction in manufacturing cost of the retractor 1. In addition, the pipe cylinder 162 of the retractor 1 has such a tube length as not to expose the contact portion of the piston 164 in the movable range of the piston 164, which enables to stably keep the shape of the sliding surface of the piston 164. This consequently prevents a reduction in traveling force of the piston 164, and accordingly, the performance of the pretensioner unit 16 can be improved.

While the present invention has been described above in detail, the foregoing description is in all aspects illustrative, and the present invention is not limited thereto. That is, numerous modifications and variations can be devised in the described aspects without departing from the scope of the invention.

## Claims

1. A seatbelt retractor comprising:
a windup drum that winds webbing; and
a pretensioner unit that causes said windup drum to rotate in a windup direction of said webbing, wherein
said pretensioner unit includes:
a pinion gear configured to rotate in association with said windup drum;
a piston that includes a rack for meshing with said pinion gear and causes said windup drum to rotate in said windup direction through said pinion gear;
a tubular cylinder that has a circular cross-section and movably holds said piston; and
a drive mechanism that drives said piston,
said piston includes, on a rear surface side of said rack, a contact portion configured to come into contact with an inner wall of said cylinder, and
said cylinder has such a tube length as not to expose said contact portion of said piston in a movable range of said piston.

2. The seatbelt retractor according to claim 1, wherein
said pretensioner unit further includes a base plate and a cover plate that sandwich said tubular cylinder from a side surface thereof,
a cutout that allows said rack to appear for meshing with said pinion gear is provided on the side surface of said tubular cylinder,
said cover plate includes a cylinder covering portion that covers said side surface of said cylinder along a shape of said side surface, and
said cylinder covering portion includes a drawn portion recessed so as to be fitted into said cutout of said cylinder.

3. The seatbelt retractor according to claim 2, wherein
said pinion gear is rotatably sandwiched between said base plate and said cover plate, with both end parts in an axial direction of said pinion gear being respectively inserted into an opening provided in said base plate and a shaft support portion provided in said cover plate,
said cover plate includes a flat covering portion that is continuous with said cylinder covering portion and includes said shaft support portion, and
in said cover plate, a part extending from said shaft support portion to said drawn portion is formed of a flat plate flush with said plate covering portion.

4. The seatbelt retractor according to claim 3, wherein said flat covering portion is provided with a first bead that extends along a direction of a load to be received, upon meshing of said pinion gear and said rack, from the end part of said pinion gear inserted into said shaft support portion of said cover plate.

5. The seatbelt retractor according to any one of claims 2 to 4, wherein said cylinder covering portion is provided with a second bead that extends along a circumferential direction of the side surface of said tubular cylinder.

6. The seatbelt retractor according to claim 5, wherein said second bead is provided at such a position as not to be adjacent to the contact portion of said piston located on an extreme end side in a state in which said pinion gear and said rack first mesh with each other.
